# FASCICULE DE BREVET EUROPEEN

(11) **EP 3 843 449 B1**
(45) Date de publication et mention de la délivrance du brevet: **02.08.2023**
(21) Numéro de dépôt: 20216355.6
(22) Date de dépôt: 22.12.2020
(51) Int. Cl.: H04W 24/08, H04W 52/02

(54) **PROCEDE D'EXTINCTION D'UN RESEAU DE COMMUNICATION**
VERFAHREN ZUM AUFLÖSEN EINES KOMMUNIKATIONSNETZES
METHOD FOR SWITCHING OFF A COMMUNICATION NETWORK

(30) Priorité: 23.12.2019 FR 1915442
(43) Date de publication de la demande: 30.06.2021
(73) Titulaire: SAGEMCOM BROADBAND SAS, 92500 Rueil-Malmaison (FR)
(72) Inventeur: LALAM, Massinissa, 92500 RUEIL MALMAISON (FR); ALARCON, Laurent, 92500 RUEIL MALMAISON (FR)
(74) Mandataire: Cabinet Le Guen Maillet

(56) Documents cités:
- EP-A1- 2 787 777
- US-A1- 2016 309 428
- US-A1- 2019 306 791
- "3rd Generation Partnership Project; Technical Specification Group Radio Access Network; Solutions for energy saving within UTRA Node B (Release 12)", 3GPP STANDARD; 25927-C00, 3RD GENERATION PARTNERSHIP PROJECT (3GPP)?, MOBILE COMPETENCE CENTRE ; 650, ROUTE DES LUCIOLES ; F-06921 SOPHIA-ANTIPOLIS CEDEX ; FRANCE , 26 septembre 2014 (2014-09-26), XP050906891, Extrait de l'Internet: URL:http://www.3gpp.org/ftp/Specs/2014-12/ Rel-12/25_series/ [extrait le 2014-09-26]

## Description

### DOMAINE TECHNIQUE

La présente invention concerne un procédé d'extinction d'au moins une partie d'un réseau de communication étendu, le réseau de communication étendu comportant plusieurs réseaux sans fil appelés réseaux FrontHaul.

### ETAT DE LA TECHNIQUE ANTERIEURE

Dans un réseau de communication tel qu'un réseau domestique, l'utilisation d'extendeurs permet d'augmenter la portée du réseau domestique à des zones éloignées les unes des autres telles que différentes pièces d'une maison. Un extendeur est un point d'accès du réseau de communication qui gère un réseau sans fil appelé réseau FrontHaul auquel peuvent s'associer des terminaux ou stations et qui est d'autre part relié à un réseau dit réseau d'acheminement (réseau « backhaul » en anglais). Le réseau d'acheminement permet d'interconnecter entre eux les points d'accès du réseau de communication, que ce soit par voie filaire et/ou par voie sans fil.

En disposant dans différentes pièces d'une maison plusieurs points d'accès émettant chacun un réseau FrontHaul, il est ainsi possible de fournir un accès sans fil au réseau de communication dans différentes zones. De cette manière, des stations telles qu'une imprimante, une prise connectée, une ampoule connectée ou une télévision, peuvent être connectées au réseau de communication même si elles se trouvent éloignées les unes des autres. De plus, une station mobile telle qu'un téléphone ou une tablette peut aisément rester connectée au réseau de communication tout en se déplaçant dans les différentes pièces d'une maison.

Cependant, l'amélioration de couverture d'un réseau sans fil permise par l'utilisation de plusieurs extendeurs diffusant des réseaux FrontHaul engendre une consommation d'énergie et une émission de rayonnement électro-magnétique supplémentaires qui sont souvent inutiles. En effet, un utilisateur n'est pas constamment à son domicile. Dès lors, il n'est pas nécessaire de maintenir en permanence la totalité de la couverture du réseau sans fil de manière optimale.

Il est possible d'éteindre les réseaux FrontHaul selon des plages horaires définies mais cette solution peut s'avérer contraignante dans un environnement multi-utilisateur ou dans des cas d'utilisation d'objets connectés nécessitant une connectivité non facilement prédictible.

Le document US 2016/309428 A1 décrit un contrôleur gérant une station de base dans un environnement de réseau hétérogène constitué d'une macro-station de base et un groupe de stations de base, le contrôleur comportant une unité de gestion de trafic du groupe de stations de base et une unité de commande de fonctionnement d'au moins une station de base du groupe de stations de base.

Le document EP 2 787 777 A1 décrit un procédé de contrôle de points d'accès, les points d'accès étant placés en état actif ou en état inactif en fonction du volume de trafic.

Le document US 2019/306791 A1 décrit un procédé visant à maintenir l'association entre une station à un réseau lorsque le point d'accès auquel est connecté la station passe d'un mode actif à un mode éteint.

Le document *3rd generation partnership project ; technical specification group radio access network ; solutions for energy saving within ultra node B* - *3 GPP standard* décrit différents scénarios visant à réduire la consommation d'énergie dans le cas de réseaux sans fil.

Il est souhaitable de pallier ces inconvénients de l'état de la technique. Il est notamment souhaitable de fournir une solution qui permette de limiter la consommation d'énergie et l'émission de rayonnement électro-magnétique tout en fournissant un service permettant une utilisation optimale en fonction des besoins utilisateur.

### EXPOSE DE L'INVENTION

Un objet de la présente invention est de proposer un procédé d'extinction d'au moins une partie d'un réseau de communication, le réseau de communication comportant une pluralité de points d'accès coordonnés de manière centralisée par un dispositif maître, les points d'accès et le dispositif maître étant interconnectés entre eux par un réseau d'acheminement, chaque point d'accès gérant un réseau sans fil dit réseau FrontHaul, une station pouvant s'associer à un réseau FrontHaul du réseau de communication. Le procédé est implémenté par le dispositif maître et comporte :
- obtenir de chaque point d'accès au moins une information concernant chaque station du réseau de communication associée audit point d'accès ou qui se désassocie dudit point d'accès, ladite au moins une information obtenue comportant une information d'association indiquant à quel réseau FrontHaul la station s'associe ou de quel réseau FrontHaul la station se désassocie et comportant en outre une information représentative d'un niveau de signal reçu par le point d'accès en provenance de la station,
- déterminer, pour chaque station du réseau de communication, si la station est associée à un réseau FrontHaul ou désassociée de tout réseau FrontHaul en fonction de l'information d'association,
- déterminer, pour chaque station du réseau de communication, si la station est mobile ou fixe en fonction d'une variation du niveau de signal reçu en provenance de la station,
- déterminer, pour chaque station mobile désassociée de tout réseau FrontHaul, le dernier réseau FrontHaul auquel la station a été associée en fonction de l'information d'association, ledit dernier réseau FrontHaul étant dit critique, initier une phase d'extinction d'au moins un réseau FrontHaul non critique quand toutes les stations mobiles sont désassociées de tout réseau FrontHaul.

Ainsi, la réassociation de stations mobiles est facilitée dans des zones où la probabilité de réassociation est la plus élevée.

Selon un mode de réalisation particulier, l'étape du procédé de déterminer, pour chaque station du réseau de communication, si la station est mobile ou fixe en fonction d'une variation du niveau de signal reçu comporte : comparer un écart-type d'un ensemble de plusieurs moyennes du niveau de signal reçu à un seuil prédéfini, chaque moyenne étant calculée sur une période de durée différente des autres périodes et déterminer que la station est mobile dans le cas où l'écart-type de l'ensemble des moyennes est supérieur audit seuil et que la station étant fixe sinon.

Selon un mode de réalisation particulier, déterminer, pour chaque station du réseau de communication, si la station est mobile ou fixe en fonction d'une variation du niveau de signal reçu comporte : comparer une valeur instantanée de niveau de signal reçu à un instant donné avec une valeur moyenne du niveau de signal reçu calculée sur une période de temps précédant ledit instant donné et déterminer que ladite station est mobile dans le cas où la valeur instantanée du niveau de signal reçu est inférieure à une différence de la valeur moyenne moins un premier seuil prédéfini ou dans le cas où la valeur instantanée du niveau de signal reçu est supérieure à une somme de la valeur moyenne et d'un deuxième seuil prédéfini.

Selon un mode de réalisation particulier, la phase d'extinction d'au moins un réseau FrontHaul non critique comporte d'éteindre un réseau FrontHaul non critique si aucune station n'est associée audit réseau FrontHaul non critique.

Ainsi, l'extinction des réseaux FrontHaul est adaptée aux besoins temporaires des stations associées. La consommation du réseau de communication et l'émission d'ondes électromagnétiques peuvent alors être limitées tout en garantissant une utilisation optimale adaptée aux besoins d'un utilisateur.

Selon un mode de réalisation particulier, ladite au moins une information obtenue comportant en outre une information représentative d'un débit de données échangées par ladite station avec un point d'accès et/ou d'une information représentative d'une qualité de service des données échangées par ladite station avec un point d'accès et/ou d'une information représentative d'une demande de connexion à destination de la station, le procédé comporte :
- déterminer, pour chaque station fixe du réseau de communication, si ladite station gère un trafic critique ou non critique, en fonction de ladite information représentative d'un débit de données et/ou d'une qualité de service et/ou de ladite information représentative d'une demande de connexion,
   et dans lequel la phase d'extinction comporte :
   - pour chaque réseau FrontHaul non critique auquel sont associées uniquement une ou des stations fixes gérant un trafic non critique, effectuer une tentative de basculement desdites stations fixes afin de les déplacer de leur réseau FrontHaul d'origine vers un autre réseau FrontHaul non éteint.

Il est ainsi possible de réduire la consommation et l'émission d'ondes électromagnétiques du réseau de communication sans que cela nuise à une qualité de service fournie à l'utilisateur en éteignant des réseaux FrontHaul auxquels sont associées des stations lorsque lesdits réseaux FrontHaul sont facilement remplaçables. De plus, une station qui gère un trafic à fort débit (i.e. supérieur à un seuil donné) et/ou pour laquelle une connexion entrante a été identifiée restera associée à son réseau FrontHaul d'origine qui présente une forte probabilité de fournir les meilleures conditions d'accès à ladite station.

Selon un mode de réalisation particulier, déterminer pour chaque station fixe dans le réseau de communication si la station gère un trafic critique ou non critique comporte de déterminer que ladite station fixe gère un trafic critique dans le cas où au moins un critère suivant est rempli : ladite station gère du trafic ayant comme qualité de service voix et/ou vidéo ; le nombre de paquets émis et/ou reçus par ladite station est supérieur à un seuil donné ; des demandes de connexion sont transmises à destination de ladite station.

Selon un mode de réalisation particulier, la tentative de basculement des stations est effectuée, pour les stations associées aux réseaux FrontHaul non critiques auxquels sont associées uniquement une ou des stations fixes gérant un trafic non critique, de manière successive selon un ordre desdits réseaux FrontHaul qui augmente avec le nombre de stations associées auxdits réseaux FrontHaul, de sorte que des tentatives de basculement sont d'abord effectuées pour les stations associées au réseau FrontHaul dont le nombre de stations associées est le plus petit avant d'être effectuées pour les stations associées à un réseau FrontHaul dont le nombre de stations associées est plus élevé.

Ainsi, l'extinction des réseaux FrontHaul auxquels sont associées des stations est effectuée de manière progressive et permet d'optimiser la couverture du réseau de communication en fonction des besoins des stations tout en minimisant le nombre de réseaux FrontHaul allumés.

Selon un mode de réalisation particulier, le dispositif maître initie la phase d'extinction après une période de temporisation commençant dès que la dernière station déterminée comme mobile est déterminée comme étant désassociée de tout réseau FrontHaul.

Selon un mode de réalisation particulier, le procédé comporte en outre, après qu'au moins un réseau FrontHaul non critique a été éteint, de rallumer les réseaux FrontHaul si une station dans le réseau de communication est déterminée comme mobile et associée à un réseau FrontHaul, une station qui se connecte pour la première fois au réseau de communication en s'associant à un réseau FrontHaul étant considérée mobile par défaut.

Ainsi, l'utilisation d'une station mobile est privilégiée.

Selon un mode de réalisation particulier, la phase d'extinction comporte en outre d'attribuer un indicateur de déplacement à une station fixe déplacée lors d'une tentative de basculement de leur réseau FrontHaul d'origine vers un autre réseau FrontHaul non éteint, et dans lequel le dispositif maître effectue, après qu'au moins un réseau FrontHaul non critique a été éteint : rallumer tous les réseaux FrontHaul dans le cas où le trafic géré par une station passe de non critique à critique et si un indicateur de déplacement est attribué à ladite station.

Dans un mode de réalisation particulier, seul le réseau FrontHaul d'origine de ladite station est rallumé dans le cas où le trafic géré par ladite station passe de non critique à critique et si un indicateur de déplacement est attribué à ladite station.

Ainsi, le rallumage des réseaux FrontHaul est adapté à l'évolution du trafic des stations. De plus, il est possible d'éviter un rallumage de tous les réseaux FrontHaul lorsqu'une station est restée associée au réseau FrontHaul considéré comme fournissant les meilleures conditions de connexion à ladite station.

Selon un mode de réalisation particulier, le procédé comporte d'envoyer une instruction d'écoute à un point d'accès gérant un réseau FrontHaul éteint de sorte à rallumer ledit réseau FrontHaul en mode écoute uniquement et, dans le cas où au moins une demande d'association en provenance d'une station non associée est reçue par ledit point d'accès, rallumer ledit réseau FrontHaul.

Ainsi, une station fixe qui était absente au moment de la phase d'extinction peut se réassocier au réseau de communication même lorsque seuls des réseaux FrontHaul éteints lui sont potentiellement accessibles.

L'invention concerne également un dispositif maître dans un réseau de communication, le réseau de communication comportant une pluralité de points d'accès coordonnés de manière centralisée par le dispositif maître, les points d'accès et le dispositif maître étant interconnectés entre eux par un réseau d'acheminement, chaque point d'accès gérant un réseau sans fil dit réseau FrontHaul, une station pouvant s'associer à un réseau FrontHaul du réseau de communication. Le dispositif maître comporte :
- des moyens pour obtenir de chaque point d'accès au moins une information concernant chaque station du réseau de communication associée audit point d'accès ou qui se désassocie dudit point d'accès, ladite au moins une information obtenue comportant une information d'association indiquant à quel réseau FrontHaul la station s'associe ou de quel réseau FrontHaul la station se désassocie et comportant en outre une information représentative d'un niveau de signal reçu par le point d'accès en provenance de la station,
- des moyens pour déterminer, pour chaque station du réseau de communication, si la station est associée à un réseau FrontHaul ou désassociée de tout réseau FrontHaul en fonction de l'information d'association,
- des moyens pour déterminer, pour chaque station du réseau de communication, si la station est mobile ou fixe en fonction d'une variation du niveau de signal reçu en provenance de la station,
- des moyens pour déterminer, pour chaque station mobile désassociée de tout réseau FrontHaul, le dernier réseau FrontHaul auquel la station a été associée en fonction de l'information d'association, ledit dernier réseau FrontHaul étant dit critique,
- des moyens configurés pour initier une phase d'extinction d'au moins un réseau FrontHaul non critique quand toutes les stations mobiles sont désassociées de tout réseau FrontHaul.

L'invention concerne également un programme d'ordinateur qui comprend des instructions pour implémenter, par un processeur d'un dispositif maître, le procédé mentionné ci-dessus dans l'un quelconque de leurs modes de réalisation, lorsque ledit programme est exécuté par ledit dispositif maître.

L'invention concerne également un support de stockage d'informations stockant un tel programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1A] illustre schématiquement un réseau de communication comportant des réseaux dits réseaux FrontHaul ;
[Fig. 1B] illustre schématiquement le réseau de communication comportant des réseaux FrontHaul dans lequel une partie des réseaux FrontHaul est éteinte ;
[Fig. 2A] illustre schématiquement un procédé d'extinction d'au moins une partie du réseau de communication selon un premier mode de réalisation, le procédé d'extinction étant effectué par un dispositif maître du réseau de communication ;
[Fig. 2B] illustre schématiquement un procédé d'extinction d'au moins une partie du réseau de communication selon différents modes de réalisation, le procédé d'extinction étant effectué par un dispositif maître du réseau de communication ;
[Fig. 3A] illustre schématiquement des étapes d'une phase d'extinction du procédé d'extinction selon un premier mode de réalisation ;
[Fig. 3B] illustre schématiquement des étapes de la phase d'extinction du procédé d'extinction selon un second mode de réalisation ;
[Fig. 4] illustre schématiquement des étapes du procédé d'extinction ultérieures à la phase d'extinction ; et
[Fig. 5] illustre schématiquement l'architecture matérielle du dispositif maître.

### EXPOSE DETAILLE DE MODES DE REALISATION

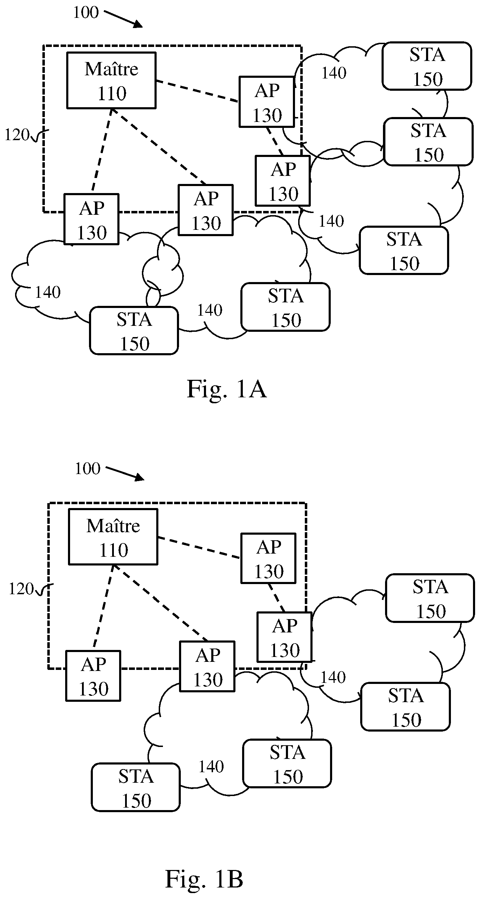

La **Fig. 1A** illustre ainsi schématiquement un réseau de communication 100 dans lequel un procédé d'extinction d'au moins une partie dudit réseau de communication 100 est implémenté.

Le réseau de communication 100 comporte une pluralité de points d'accès AP 130, chaque point d'accès AP 130 gérant au moins un réseau sans fil dit réseau FrontHaul 140. Chaque réseau FrontHaul 140 peut ainsi couvrir une zone géographique distincte des autres réseaux FrontHaul 140, ce qui permet d'étendre le réseau de communication, par exemple en couvrant plusieurs pièces d'une maison. Plusieurs points d'accès AP 130 peuvent être colocalisés dans un même équipement, chaque point d'accès AP 130 gérant un réseau FrontHaul dans une bande de fréquence différente (e.g. 2.4 GHz et 5 GHz).

Les points d'accès AP 130 sont interconnectés entre eux et interconnectés avec un dispositif maître 110 par un réseau d'acheminement 120. Le dispositif maître 110 coordonne l'ensemble des points d'accès AP 130. Le dispositif maître 110 peut ainsi collecter des données échangées entre n'importe quel point d'accès AP 130 du réseau d'acheminement 120 et une station 150. Le dispositif maître 110 peut en outre envoyer à chaque point d'accès AP 130 des instructions d'extinction ou de rallumage d'un réseau FrontHaul via le réseau d'acheminement 120. Le dispositif maître 110 peut ou non gérer lui-même un ou plusieurs réseaux FrontHaul 140.

Une station 150 se connecte au réseau de communication 100 en s'associant à un réseau FrontHaul 140 géré par l'un des points d'accès AP 130. La station 150 s'associe à un réseau FrontHaul 140 après avoir échangé des messages avec le point d'accès AP 130 qui gère le réseau FrontHaul 140 selon une procédure classique d'association et après avoir reçu une autorisation d'association dudit point d'accès AP 130. Chaque station 150 qui est autorisée à s'associer à l'un des réseaux FrontHaul 140 du réseau de communication est identifiée de manière unique dans le réseau de communication 100, par exemple grâce à son adresse MAC (pour « Media Access Control » en anglais). Le dispositif maître 110 peut ainsi reconnaître une station 150 qui s'associe à un premier réseau FrontHaul 140 puis qui, en se déplaçant, s'associe à un réseau FrontHaul 140 voisin. Le dispositif maître 110 peut en outre reconnaître une station 150 qui, après s'être déconnectée du réseau de communication en se désassociant d'un réseau FrontHaul 140, se réassocie audit réseau FrontHaul 140 ou se réassocie à un autre réseau FrontHaul 140.

La **Fig. 1B** illustre schématiquement le réseau de communication 100 dans lequel le procédé d'extinction d'au moins une partie dudit réseau de communication 100 est implémenté et dans lequel une partie des réseaux FrontHaul 140 est éteinte.

De manière identique à la Fig. 1A, le dispositif maître 110 et l'ensemble des points d'accès AP 130 sont interconnectés par le réseau d'acheminement 120.

Cependant, au moins un réseau FrontHaul 140 est éteint. Le point d'accès AP 130 correspondant gérant habituellement le réseau FrontHaul 140 éteint n'émet ainsi aucune balise (« beacon » en anglais) correspondant audit réseau FrontHaul 140.

Les stations 150 identifiées dans le réseau de communication 100 sont associées aux réseaux FrontHaul 140 restés allumés.

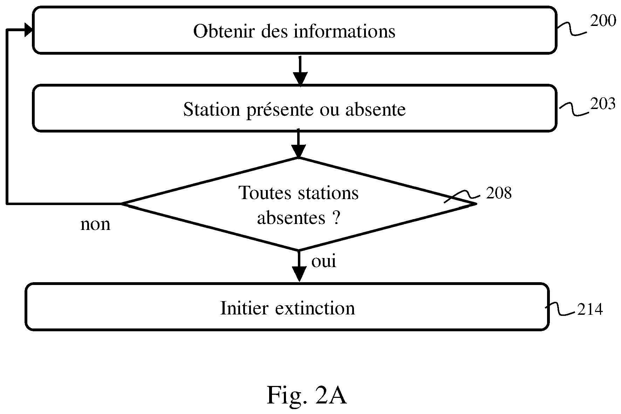

La Fig. 2A illustre schématiquement le procédé d'extinction d'au moins une partie du réseau de communication 100, implémenté par le dispositif maître 110, selon un premier mode de réalisation.

Dans une première étape 200, le dispositif maître 110 obtient des points d'accès AP 130 une ou des informations concernant les stations 150 identifiées dans le réseau de communication 100. Pour chaque station, les informations concernant les stations 150 identifiées dans le réseau de communication 100 comportent une identification de la station 150 et une information d'association de la station 150. L'information d'association de la station 150 comprend une identification du réseau FrontHaul 140 auquel ladite station 150 vient de s'associer ou une identification du réseau FrontHaul 140 duquel la station 150 vient de se désassocier.

Dans une étape 203, le dispositif maître 110 détermine, pour chaque station 150, si la station 150 est présente ou absente. Autrement dit, le dispositif maître 110 détermine à partir de l'information d'association si à un instant considéré une station 150 est associée à un réseau FrontHaul 140 ou désassociée de tout réseau FrontHaul 140.

Dans une étape 208, le dispositif maître 110 identifie si toutes les stations 150 sont absentes. Si au moins une station 150 est présente, le dispositif maître 110 réitère les étapes 200 à 203. S'il n'y a plus aucune station 150 présente, le dispositif maître 110 effectue une étape 214. Dans l'étape 214, le dispositif maître 110 initie une phase d'extinction d'au moins un réseau FrontHaul 140.

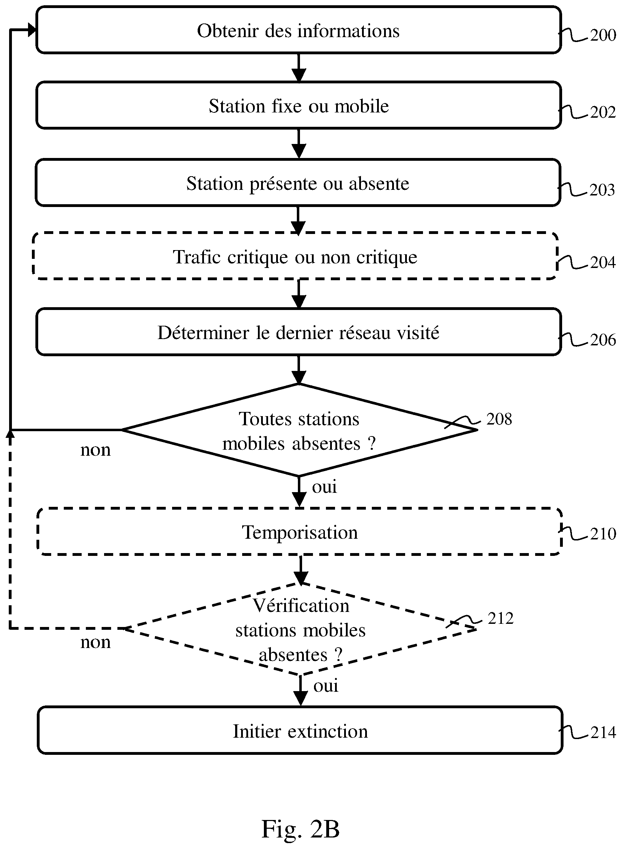

La Fig. 2B illustre schématiquement le procédé d'extinction d'au moins une partie du réseau de communication 100, implémenté par le dispositif maître 110, selon différents modes de réalisation.

Dans une première étape 200, le dispositif maître 110 obtient des points d'accès AP 130 des informations concernant les stations 150 identifiées dans le réseau de communication 100. Pour chaque station, les informations concernant les stations 150 identifiées dans le réseau de communication 100 comportent une identification de la station 150 et une information d'association de la station 150. L'information d'association de la station 150 comprend une identification du réseau FrontHaul 140 auquel ladite station 150 vient de s'associer ou une identification du réseau FrontHaul 140 duquel ladite station 150 vient de se désassocier. Dans le cas où la station 150 est désassociée de tout réseau FrontHaul 140, l'information d'association permet au dispositif maître 110 d'identifier le dernier réseau FrontHaul 140 auquel la station 150 a été associée. Les informations concernant les stations 150 identifiées dans le réseau de communication 100 et associées à un réseau FrontHaul 140 comportent en outre un niveau de signal reçu, en provenance de chaque station 150, par le point d'accès AP 130 tel qu'un indicateur RSSI (pour « Received Signal Strength Indicator » en anglais) et des informations représentatives d'un débit de données échangées entre la station 150 et le réseau de communication 100 telles que par exemple un nombre de paquets émis et/ou reçus par la station 150, un marqueur de qualité de service indiquant si la station 150 gère un trafic ayant une qualité de service voix et/ou vidéo. Le dispositif maître 110 peut en outre obtenir des informations indiquant si des demandes de connexion entrantes sont transmises à destination de la station 150. Cela peut être par exemple le cas pour une caméra qu'un utilisateur cherche à contrôler à distance. Pour chaque station 150 associée à un réseau FrontHaul 140, le dispositif maître 110 obtient de manière périodique et pendant toute la durée d'association de la station 150 les informations de niveau de signal reçu, les informations représentatives d'un débit de données échangées et les informations indiquant si des demandes de connexion entrantes sont transmises à la station 150.

Dans une étape suivante 202, le dispositif maître 110 détermine pour chaque station 150 si ladite station 150 est fixe ou mobile. Une station 150 est considérée mobile si une variation de son niveau de signal ou RSSI est au-dessus d'un seuil, et fixe sinon.

Selon un mode de réalisation, la variation du niveau de signal est déterminée en calculant l'écart-type d'un ensemble de moyennes du niveau de signal, chaque moyenne étant calculée sur une période de durée prédéfinie et distincte des autres périodes. Par exemple, le niveau de signal est moyenné sur plusieurs périodes de temps dont les durées peuvent être d'une minute, cinq minutes, dix minutes, quinze minutes, trente minutes et une heure. L'écart-type de l'ensemble de ces moyennes est ensuite comparé à un seuil, par exemple au seuil de 3%. La station 150 correspondante est considérée mobile si l'écart-type des moyennes est supérieur audit seuil et fixe sinon.

Selon un mode de réalisation alternatif, le temps est découpé à partir du moment où la station 150 s'associe à un réseau FrontHaul en périodes égales d'une durée prédéfinie. Une valeur moyenne M du niveau de signal est calculée pour chacune desdites périodes. Une valeur instantanée du niveau de signal notée RSSI_c, reçue à chaque fin de période, est comparée à la valeur moyenne M calculée sur la période précédant ledit instant donné. Si la valeur instantanée du niveau de signal est inférieure à une différence de la valeur moyenne M moins un premier seuil S1 ou si la valeur instantanée du niveau de signal est supérieure à une somme de la valeur moyenne M et d'un deuxième seuil S2, alors la station 150 est considérée comme mobile. Sinon, la station 150 est considérée fixe. Autrement dit, une station 150 est considérée mobile si au moins l'une des conditions suivantes est remplie : RSSI_c <M - S1, ou RSSI_c > M + S2.

Au moment où une station 150 s'associe avec un réseau FrontHaul 140 et jusqu'à ce qu'une analyse de la variation du niveau de signal permette de déterminer si ladite station 150 est fixe ou mobile, la station 150 est considérée fixe si elle était fixe au moment de sa précédente désassociation d'un des réseaux FrontHaul 140 et considérée mobile si elle était mobile au moment de sa précédente désassociation d'un des réseaux FrontHaul 140. Si la station 150 se connecte pour la première fois au réseau de communication 100 et n'a donc jamais été identifiée dans le réseau de communication 100, ladite station 150 est considérée mobile par défaut. C'est le cas par exemple d'une nouvelle station introduite dans le réseau par un l'utilisateur.

Dans une étape 203, le dispositif maître 110 détermine, pour chaque station 150, si la station 150 est présente ou absente. Autrement dit, le dispositif maître 110 détermine à partir de l'information d'association si à un instant considéré une station 150 est associée à un réseau FrontHaul 140 ou désassociée de tout réseau FrontHaul 140.

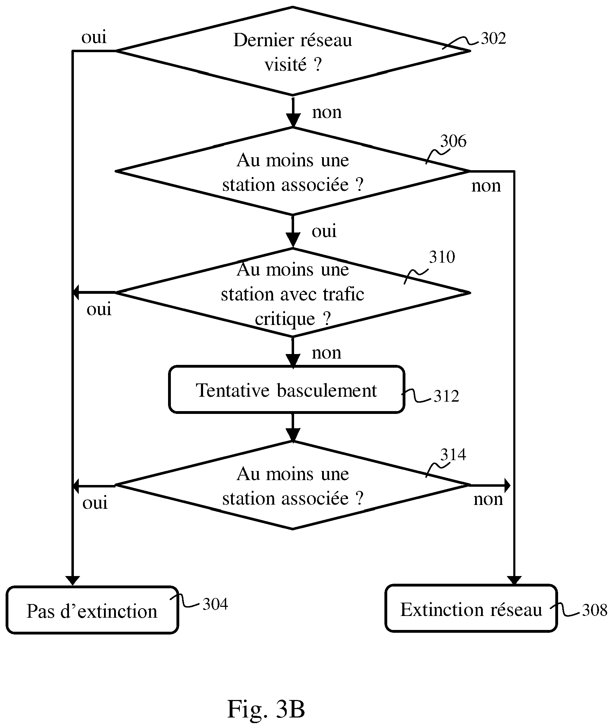

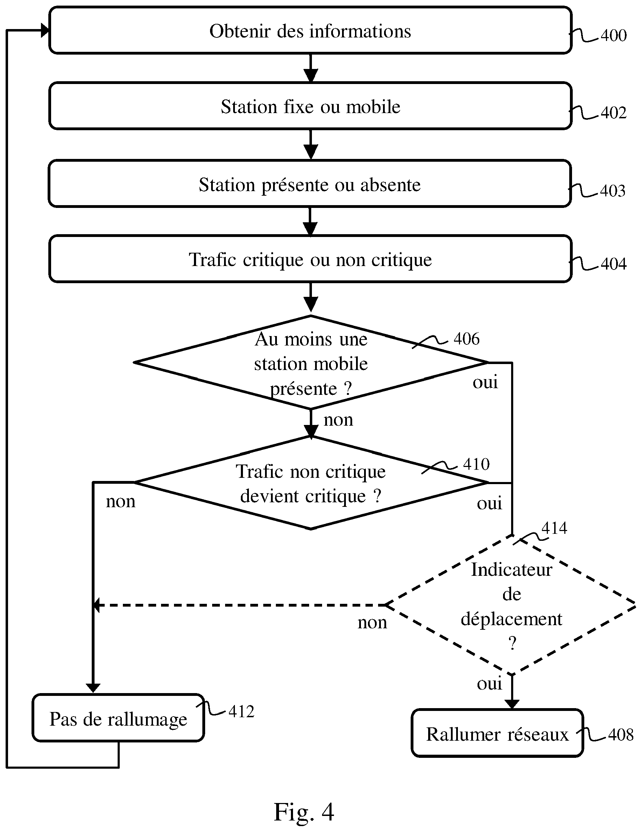

Dans une étape optionnelle 204, le dispositif maître 110 détermine, pour chaque station 150 fixe, si ladite station 150 gère un trafic critique ou non critique en fonction d'un débit de données ou en fonction de demandes de connexions à destination de ladite station 150. Une station 150 fixe gère du trafic critique si elle remplit au moins un des critères suivants. Un premier critère est que la station 150 gère du trafic ayant comme qualité de service voix et/ou vidéo, cette qualité de service étant identifiée soit au niveau de la couche MAC, soit au niveau de la couche IP, soit au niveau de l'application à l'origine de ce trafic en cas de mise en oeuvre d'algorithme d'inspection profonde (« Deep Inspection » en anglais). En effet, une qualité de service voix et/ou vidéo nécessite moins de latence et/ou plus de débit qu'un échange d'informations avec un serveur de courrier électronique destiné à vérifier la présence de nouveaux messages. Un deuxième critère est que la station 150 envoie ou reçoit un nombre de paquets supérieur à un seuil donné, comme par exemple un seuil de dix paquets émis ou reçus par seconde. Un troisième critère est que des demandes de connexion sont transmises à destination de la station 150. Le troisième critère peut être vérifié par le dispositif maître 110 par analyse d'une table de connexions entrantes et sortantes en cours dans le réseau de communication 100, également appelée table de conntrack. Une table de conntrack peut être transmise par chaque point d'accès AP 130 au dispositif maître 110. Dans un mode de réalisation alternatif, une table de conntrack peut être communiquée au dispositif maître 110 par une entité en charge de connexions telle qu'une passerelle externe au réseau de communication 100. Le dispositif maître 110 peut déterminer au cours du temps si le trafic d'une station 150 est critique ou non critique en fonction des données reçues. Cette information est notamment utilisée par le procédé décrit en lien avec les Fig. 3B et 4. Dans une étape 206, le dispositif maître 110 détermine, pour chaque station 150 mobile et absente, le dernier réseau FrontHaul 140 visité par ladite station 150. Chaque réseau FrontHaul 140 du réseau de communication 100 peut être identifié par un indicateur unique, comme par exemple le BSSID (pour « Basic Set Service IDentifier » en anglais) pour la technologie de réseau sans-fil Wi-Fi / IEEE 802.11. Un tel dernier réseau FrontHaul 140 visité par une station 150 est dit réseau FrontHaul 140 critique. A noter que lorsqu'une station 150 mobile s'associe à un réseau FrontHaul 140, par exemple lorsqu'une station 150 mobile est déterminée comme présente à l'étape 203, le dispositif maître 110 supprime pour ladite station 150 le dernier réseau FrontHaul 140 visité qui a été déterminé précédemment, s'il y en a un. Le réseau FrontHaul 140 en question n'est alors plus considéré comme critique, sauf s'il est déterminé comme étant le dernier réseau FrontHaul 140 visité par une autre station 150. Les réseaux FrontHaul 140 critiques correspondent, à un moment donné, à tous les derniers réseaux FrontHaul 140 visités déterminés pour l'ensemble des stations 150 mobiles et absentes du réseau de communication 100.

Dans un mode de réalisation particulier, le dispositif maître 110 effectue une surveillance permanente des stations 150 et détermine ainsi au fur et à mesure qu'il collecte des informations en provenance des points d'accès AP 130 si une station 150 est fixe ou mobile, présente ou absente, optionnellement si elle gère un trafic critique ou non critique et détermine en outre le dernier réseau FrontHaul 140 visité par une station mobile absente. Le dispositif maître 110 peut en outre identifier un changement de statut, par exemple si une station 150 mobile devient fixe ou inversement, si un trafic critique géré par une station 150 devient non critique ou encore si une station 150 présente devient absente. Dans un mode de réalisation alternatif, le dispositif maître 110 effectue une surveillance périodique des stations 150, par exemple toutes les 10 secondes.

Dans une étape 208, le dispositif maître 110 identifie si toutes les stations 150 mobiles sont absentes. Si au moins une station 150 mobile est présente, le dispositif maître 110 réitère les étapes 200 à 206. S'il n'y a plus aucune station 150 présente ou si seules des stations 150 fixes sont présentes, le dispositif maître 110 effectue une étape 214.

Dans l'étape 214, le dispositif maître 110 initie une phase d'extinction d'au moins un réseau FrontHaul 140 non critique. Comme précisé en relation avec l'étape 206, un réseau FrontHaul 140 est considéré critique à moment donné s'il fait partie des derniers réseaux FrontHaul 140 visités déterminés pour l'ensemble des stations 150 mobiles et absentes du réseau de communication 100.

Dans un mode de réalisation particulier, le dispositif maître 110 initie la phase d'extinction 214 après une période de temporisation, lors d'une étape 210, commençant dès que la dernière station 150 mobile présente se désassocie d'un réseau FrontHaul 140. A la fin de la période de temporisation, le dispositif maître 110 vérifie dans une étape 212 que toute station 150 associée à un réseau FrontHaul 140 du réseau de communication 100 est fixe. Si c'est le cas, le dispositif maître 110 initie la phase d'extinction. Dans le cas contraire, par exemple si une station 150 absente et considérée comme mobile avant sa précédente désassociation envoie une demande d'association avec un réseau FrontHaul 140 du réseau de communication 100 ou si une station 150 fixe et présente est devenue mobile, le dispositif maître 110 n'initie pas la phase d'extinction et les étapes 200 à 206 sont réitérées.

Ainsi, la consommation du réseau de communication 100 et l'émission d'ondes électromagnétiques peuvent être limitées tout en garantissant une utilisation optimale adaptée aux besoins d'un utilisateur.

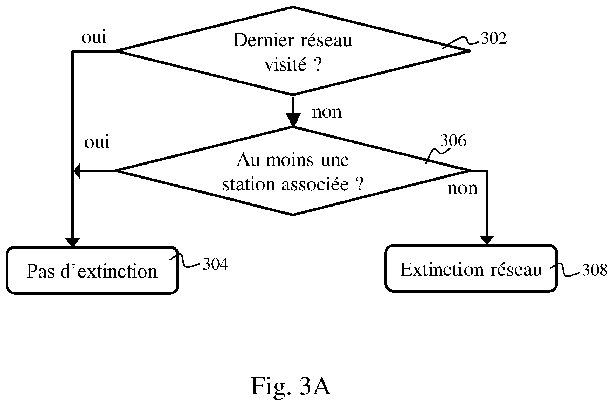

La Fig. 3A illustre schématiquement des étapes de la phase d'extinction du procédé d'extinction selon un premier mode de réalisation. Lesdites étapes sont effectuées par le dispositif maître 110 lorsque l'extinction d'au moins un réseau FrontHaul 140 est initiée, autrement dit lors de l'étape 214 décrite précédemment en relation avec la Fig. 2B.

Lors de la phase d'extinction, le dispositif maître 110 identifie pour chaque réseau FrontHaul 140 du réseau de communication 100 s'il doit être éteint ou pas.

Dans une étape 302, le dispositif maître 110 identifie pour chaque réseau FrontHaul 140 si ledit réseau FrontHaul 140 est critique. Si c'est le cas, une étape 304 est effectuée et le réseau FrontHaul 140 n'est pas éteint. Sinon, une étape 306 est effectuée.

A l'étape 306, le dispositif maître 110 identifie, pour chaque réseau FrontHaul 140 restant, si au moins une station 150 fixe est associée audit réseau FrontHaul 140. Si c'est le cas, l'étape 304 est effectuée et le réseau FrontHaul 140 n'est pas éteint. Sinon, une étape 308 est effectuée et le réseau FrontHaul 140 est éteint. Dans l'étape 308, le dispositif maître envoie une instruction d'extinction au point d'accès AP 130 qui gère le réseau FrontHaul 140 en question de sorte que ledit point d'accès AP 130 éteint ledit réseau FrontHaul 140, typiquement en arrêtant d'émettre des balises dudit réseau FrontHaul 140 ou en arrêtant complètement la puce radio (« chipset » en anglais) en charge dudit réseau FrontHaul 140 si c'est le seul réseau FrontHaul 140 présent au sein de ladite puce radio.

A l'étape 304, le dispositif maître 110 peut en outre identifier chaque réseau FrontHaul 140 qui n'est pas éteint et doit rester allumé.

Ainsi, l'extinction des réseaux FrontHaul 140 est adaptée en fonction des besoins temporaires des stations 150 associées. De plus, la réassociation de stations 150 mobiles est facilitée dans des zones où lesdites stations 150 mobiles se sont désassociées pour la dernière fois, qui correspondent aux zones où la probabilité de réassociation est la plus élevée, comme c'est le cas par exemple pour un réseau FrontHaul 140 qui serait proche de l'entrée d'un domicile.

La Fig. 3B illustre schématiquement des étapes de la phase d'extinction du procédé d'extinction selon un second mode de réalisation.

Dans l'étape 302 présentée précédemment en relation avec la fig. 3A, le dispositif maître 110 identifie si un réseau FrontHaul 140 est un réseau FrontHaul 140 critique. Si c'est le cas, l'étape 304 est effectuée et le réseau FrontHaul 140 en question n'est pas éteint. Dans le cas contraire, l'étape 306 est effectuée.

A l'étape 306, précédemment décrite en relation avec la fig. 3A, le dispositif maître 110 identifie pour chaque réseau FrontHaul 140 non critique si au moins une station 150 est associée audit réseau FrontHaul 140. Si aucune station 150 n'est associée, l'étape 308 est effectuée et le réseau FrontHaul 140 en question est éteint. Si au moins une station 150 est associée audit réseau FrontHaul 140, une étape 310 est effectuée.

Dans l'étape 310, le dispositif maître 110 identifie pour chaque réseau FrontHaul 140 non critique si, parmi la ou les stations 150 associées, au moins une station 150 gère du trafic critique. Si au moins une station 150 associée à un réseau FrontHaul 140 gère du trafic critique, l'étape 304 est effectuée et ledit réseau FrontHaul 140 n'est pas éteint. Ainsi, une station 150 qui gère un trafic à fort débit, comme par exemple une caméra qui échange des données vidéo peut rester associée au réseau FrontHaul 140 auquel la station 150 s'est préférentiellement associée, et donc qui présente une forte probabilité de fournir les meilleures conditions d'accès à ladite station 150.

Dans le cas contraire, si, pour un réseau FrontHaul 140, aucune station 150 qui y est associée ne gère de trafic critique, une étape 312 est effectuée.

A l'étape 312, le dispositif maître 110 effectue une tentative de basculement des stations 150 qui sont associées aux réseaux FrontHaul 140 concernés, i.e. les réseaux FrontHaul 140 non éteints qui ne sont pas considérés critiques à l'étape 302 et auxquels sont associées uniquement des stations 150 gérant du trafic non critique. La tentative de basculement effectuée par le dispositif maître 110 vise à déplacer les stations 150 associées auxdits réseaux FrontHaul 140 concernés vers un autre réseau FrontHaul 140 non éteint.

Pour effectuer la tentative de basculement, le dispositif maître 110 envoie une instruction de déplacement au point d'accès AP 130 gérant le réseau FrontHaul 140 concerné. Sur réception de l'instruction de déplacement, ledit point d'accès AP 130 peut utiliser une trame de désassociation à destination de la station 150, afin de forcer la station 150 à se désassocier du réseau FrontHaul 140, puis identifier la station 150 comme étant interdite d'accès audit réseau FrontHaul 140 par exemple en l'inscrivant sur une liste noire. Ainsi, une demande d'association envoyée par la station 150 audit réseau FrontHaul 140 sera refusée ou ignorée par ledit réseau FrontHaul 140. Dès lors, la station 150 va chercher à s'associer à un autre réseau FrontHaul 140 à portée de ladite station 150. Le dispositif maître 110 peut en outre vérifier que chaque station 150 forcée à se désassocier s'est réassociée à un autre réseau FrontHaul 140. Si ce n'est pas le cas, par exemple lorsqu'une station 150 ne parvient pas à se réassocier à un autre réseau FrontHaul 140, ladite station 150 est supprimée de la liste noire. Alternativement, le point d'accès AP 130 peut utiliser une trame de mesures de l'environnement selon le standard IEEE 802.11k (Measurement Request/Report en anglais) permettant d'identifier un réseau FrontHaul 140 non éteint à portée de ladite station 150 et/ou une trame de transition spécifique au standard IEEE 802.11v (BSS Transition Management Request/Report en anglais) permettant de demander à une station 150 de se déplacer vers un tel réseau FrontHaul 140.

Alternativement, pour effectuer la tentative de basculement, le dispositif maître 110 recense le nombre de stations 150 à déplacer puis envoie une instruction d'extinction au point d'accès AP 130. Le dispositif maître 110 vérifie ensuite que chaque station 150 précédemment associée au réseau FrontHaul 140 qui a été éteint s'est associée à un autre réseau FrontHaul 140 non éteint du réseau de communication 100 et si ce n'est pas le cas, alors le dispositif maître 110 envoie une instruction de rallumage au point d'accès AP 130. Dans un mode de réalisation particulier, lorsqu'une tentative de basculement d'une station 150 aboutit au déplacement de ladite station 150 d'un réseau FrontHaul 140 dit réseau FrontHaul 140 d'origine vers un autre réseau FrontHaul 140, le dispositif maître 110 attribue à ladite station 150 un indicateur de déplacement comportant l'identification du réseau FrontHaul d'origine. Ainsi, il est possible de garder une trace d'un déplacement d'une station 150 effectué lors de la phase d'extinction.

Lorsque la tentative de basculement de chaque station 150 d'un réseau FrontHaul 140 a été effectuée, le procédé continue à une étape 314. Dans l'étape 314, le dispositif maître 110 identifie si au moins une station 150 est associée audit réseau FrontHaul 140. Si c'est le cas, cela signifie que la tentative de basculement a échoué pour au moins une station 150 et l'étape 304 est effectuée, ledit réseau FrontHaul 140 n'est pas éteint. Dans le cas contraire, si aucune station 150 n'est associée au réseau FrontHaul 140, l'étape 308 est effectuée et le réseau FrontHaul 140 est éteint. De cette manière, il est possible de réduire la consommation du réseau de communication 100 en maximisant le nombre de réseaux FrontHaul 140 éteints tout en conservant un accès et un service suffisants à l'utilisateur. Il est ainsi possible d'éteindre un réseau FrontHaul 140 habituellement utilisé par une station 150 si ledit réseau FrontHaul 140 est facilement remplaçable par un autre réseau FrontHaul 140 sans que cela nuise à une qualité de service fournie à l'utilisateur.

Selon un mode de réalisation particulier, le dispositif maître 110 détermine un ordre d'extinction qui définit dans quel ordre les tentatives de basculement sont effectuées et dans quel ordre les réseaux FrontHaul 140 sont éteints. Pour cela, le dispositif maître 110 détermine un ordre des réseaux FrontHaul 140 non critiques auxquels sont associées uniquement des stations 150 gérant un trafic non critique. L'ordre desdits réseaux FrontHaul 140 est déterminé en fonction du nombre de stations 150 associées à chacun desdits réseaux FrontHaul 140 et dans un ordre croissant. Autrement dit, à chacun desdits réseaux FrontHaul 140 est attribué un ordre qui augmente avec le nombre de stations 150 associées. Dans l'ordre déterminé, le premier réseau FrontHaul 140 présente ainsi le nombre de stations 150 associées le plus petit et le dernier réseau FrontHaul 140 présente le nombre de stations 150 associées le plus important. Si deux réseaux FrontHaul 140 présentent le même nombre de stations 150 associées, un classement arbitraire peut être effectué.

Le dispositif maître 110 effectue alors les tentatives de basculement des stations 150 suivant l'ordre des réseaux FrontHaul 140 auxquels elles sont associées. Ainsi, le dispositif maître 110 effectue d'abord une tentative de basculement des stations 150 associées au premier réseau FrontHaul 140. Si toutes les stations 150 associées audit premier réseau FrontHaul 140 sont déplacées, le premier réseau FrontHaul 140 est éteint. Sinon, le réseau FrontHaul 140 est laissé allumé. Le dispositif maître procède ensuite de la même manière pour le second réseau FrontHaul 140 puis successivement pour chaque réseau FrontHaul 140 dans l'ordre déterminé.

La **Fig. 4** illustre schématiquement des étapes du procédé d'extinction qui sont implémentées par le dispositif maître 110 ultérieurement à la phase d'extinction. Lesdites étapes sont donc effectuées après que les étapes décrites en relation avec les Figs. 3A ou 3B ont été effectuées et lorsqu'au moins un des réseaux FrontHaul 140 est éteint.

Le dispositif maître 110 effectue dans un premier temps des étapes 400, 402, 403 et 404 similaires aux étapes respectives 200, 202, 203 et 204 précédemment décrites en relation avec la Fig. 2B. Ainsi, le dispositif maître 110 obtient des informations des points d'accès AP 130 et, à partir desdites informations, détermine pour chaque station 150 si elle est mobile ou fixe, si elle est présente ou absente, et détermine pour chaque station 150 fixe si elle gère du trafic critique ou non critique.

Dans une étape 406, le dispositif maître 110 détecte si au moins une station 150 est mobile et présente. La phase d'extinction étant initiée lorsque toutes les stations 150 mobiles sont absentes, une station 150 mobile et présente peut être détectée à l'étape 406 dans les cas suivants : soit une station 150 précédemment considérée comme mobile envoie une demande d'association à un réseau FrontHaul 140, soit une station 150 fixe présente devient mobile ou soit une station 150 s'associe pour la première fois à un réseau FrontHaul 140 du réseau de communication 100 et est donc considérée mobile par défaut. Si au moins une station 150 mobile est détectée, une étape 408 est effectuée.

Dans l'étape 408, le dispositif maître 110 envoie une instruction de rallumage à tous les points d'accès AP 130 n'émettant plus de réseau FrontHaul 140 demandant de rallumer tous les réseaux FrontHaul 140 éteints.

Si aucune station 150 mobile n'est détectée à l'étape 406, une étape 410 est effectuée.

Dans l'étape 410, le dispositif maître 110 détecte, pour chaque station 150 gérant du trafic non critique au moment où la phase d'extension est initiée, si le trafic géré par ladite station 150 devient critique. Autrement dit, le dispositif maître identifie une modification du trafic géré par chaque station 150 et si ledit trafic passe d'un statut non critique à critique. Si aucune modification n'est détectée, une étape 412 est effectuée.

Dans l'étape 412, aucun réseau FrontHaul 140 n'est rallumé et le dispositif maître réitère les étapes 400 à 406.

Si, pour une station 150, le trafic géré par ladite station 150 passe de non critique à critique, l'étape 408 est effectuée et tous les réseaux FrontHaul 140 éteints sont rallumés.

Selon un mode de réalisation alternatif, si le trafic d'une station 150 passe de non critique à critique, une étape 414 est effectuée préalablement à l'étape 408. Dans l'étape 414, le dispositif maître 110 identifie, pour chaque station 150 dont le trafic est passé de non critique à critique, si un indicateur de déplacement est attribué à ladite station 150. Comme décrit précédemment en relation avec l'étape 312 de la Fig. 3, un indicateur de déplacement est attribué à une station 150 lorsque ladite station 150 est déplacée de son réseau FrontHaul 140 d'origine vers un autre réseau FrontHaul 140 à la suite d'une tentative de basculement. Si aucun indicateur de déplacement n'est attribué, l'étape 412 est effectuée et les réseaux FrontHaul 140 éteints ne sont pas rallumés. Si un indicateur de déplacement est attribué à la station 150, l'étape 408 est effectuée et tous les réseaux FrontHaul 140 éteints sont rallumés. Ainsi, il est possible d'adapter le rallumage des réseaux FrontHaul 140 en fonction de l'évolution du trafic d'une station 150. De plus, il est possible d'éviter un rallumage de tous les réseaux FrontHaul 140 si une station 150 est restée associée à son réseau FrontHaul 140 d'origine lors de la phase d'extinction, le réseau FrontHaul 140 d'origine étant considéré comme fournissant les meilleures conditions de connexion, d'un point de vue débit par exemple, à une station 150.

Alternativement, si à l'étape 414 un indicateur de déplacement est identifié pour une station 150 fixe dont le trafic passe de non critique à critique, le dispositif maître 110 envoie une instruction de rallumage uniquement au point d'accès AP 130 qui gère le réseau FrontHaul 140 d'origine de la station 150 en question. Puis, si des réseaux FrontHaul 140 sont encore éteints, l'étape 400 est réitérée. Ainsi, il est possible de limiter le rallumage des réseaux FrontHaul 140 seulement aux réseaux FrontHaul 140 qui sont utiles à l'utilisateur. Lorsque l'étape 408 est effectuée, le dispositif maître 110 supprime tous les indicateurs de déplacement ayant pu être attribués.

A la suite de l'étape 408, le dispositif maître 110 peut réitérer l'étape 200 décrite précédemment.

Selon un mode de réalisation particulier (non représenté sur les figures), le dispositif maître 110 effectue, ultérieurement à la phase d'extinction, une étape d'écoute des stations 150. L'étape d'écoute peut être effectuée lorsqu'au moins un réseau FrontHaul 140 est éteint, par exemple à la suite de l'étape 412 de manière périodique. Dans l'étape d'écoute, le dispositif maître 110 envoie une instruction d'écoute à au moins un point d'accès AP 130 gérant un réseau FrontHaul 140 éteint. Sur réception de l'instruction d'écoute, le point d'accès AP 130 rallume le réseau FrontHaul 140 dans un mode écoute uniquement, autrement dit le point d'accès AP 130 rallume uniquement une chaîne de réception et pas de chaîne de transmission, permettant au point d'accès AP 130 de réceptionner des messages mais pas d'en émettre. Le point d'accès AP 130 peut ainsi détecter si d'éventuelles demandes d'association sont émises en provenance de stations 150 non associées mais autorisées à accéder au réseau de communication, autrement dit de stations 150 qui ne parviennent pas à s'associer aux réseaux FrontHaul 140 laissés allumés. Si c'est le cas, l'étape 408 est effectuée et les réseaux FrontHaul 140 sont rallumés. Alternativement, seul le réseau FrontHaul 140 géré par ledit point d'accès AP 130 est rallumé.

Ainsi, il est possible de permettre à une station 150 fixe qui était absente au moment de la phase d'extinction de se réassocier au réseau de communication 100 si seuls des réseaux FrontHaul 140 éteints lui sont potentiellement accessibles.

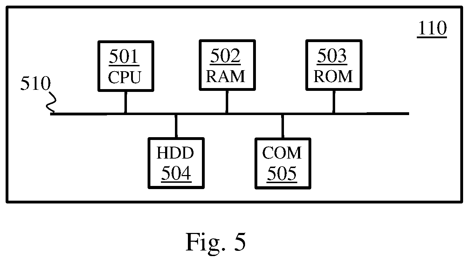

La Fig. 5 illustre schématiquement l'architecture matérielle du dispositif maître 110. Le dispositif maître 110 comporte alors, reliés par un bus de communication 510 ; un processeur ou CPU (« Central Processing Unit » en anglais) 501 ; une mémoire vive RAM 502 ; une mémoire morte ROM (« Read Only Memory » en anglais) 503 ; une unité de stockage 504, telle qu'un disque dur HDD (« Hard Disk Drive » en anglais), ou un lecteur de support de stockage, tel qu'un lecteur de cartes SD (« Secure Digital » en anglais) ; et une interface COM 505 permettant de communiquer avec les points d'accès AP 130.

Le processeur CPU 501 est capable d'exécuter des instructions chargées dans la RAM 502 à partir de la ROM 503, d'une mémoire externe (telle qu'une carte SD), d'un support de stockage, ou d'un réseau de communication. Lorsque le dispositif maître 110 est mis sous tension, le processeur CPU 501 est capable de lire de la RAM 502 des instructions et de les exécuter. Ces instructions forment un programme d'ordinateur causant l'implémentation, par le processeur CPU 501, de tout ou partie des étapes décrites ici en relation avec le dispositif maître 110.

Tout ou partie desdites étapes peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais). D'une manière générale, le dispositif maître 110 comporte ainsi de la circuiterie électronique configurée pour implémenter tout ou partie des étapes décrites ici en relation avec le dispositif maître 110.

Ainsi, tout ou partie des algorithmes et étapes décrits ici en relation avec le dispositif maître 110 peut être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

A noter que chaque point d'accès AP 130 peut suivre la même architecture matérielle.

## Revendications

1. Un procédé d'extinction d'au moins une partie d'un réseau de communication (100), le réseau de communication (100) comportant une pluralité de points d'accès (130) coordonnés de manière centralisée par un dispositif maître (110), les points d'accès (130) et le dispositif maître (110) étant interconnectés entre eux par un réseau d'acheminement (120), chaque point d'accès (130) gérant un réseau sans fil dit réseau FrontHaul (140), une station (150) pouvant s'associer à un réseau FrontHaul (140) du réseau de communication (100), le procédé étant implémenté par le dispositif maître (110) et étant **caractérisé en ce qu'**il comporte :
- obtenir (200) de chaque point d'accès (130) au moins une information concernant chaque station (150) du réseau de communication (100) associée audit point d'accès (130) ou qui se désassocie dudit point d'accès (130), ladite au moins une information obtenue comportant une information d'association indiquant à quel réseau FrontHaul (140) la station (150) s'associe ou de quel réseau FrontHaul (140) la station (150) se désassocie, et comportant en outre une information représentative d'un niveau de signal reçu par le point d'accès (130) en provenance de la station (150),
- déterminer (203), pour chaque station (150) du réseau de communication (100), si la station (150) est associée à un réseau FrontHaul (140) ou désassociée de tout réseau FrontHaul (140) en fonction de l'information d'association,
- déterminer (202), pour chaque station (150) du réseau de communication (100), si la station (150) est mobile ou fixe en fonction d'une variation du niveau de signal reçu en provenance de la station (150),
- déterminer (206), pour chaque station (150) mobile désassociée de tout réseau FrontHaul (140), le dernier réseau FrontHaul (140) auquel la station (150) a été associée en fonction de l'information d'association, ledit dernier réseau FrontHaul (140) étant dit critique,
- initier (214) une phase d'extinction d'au moins un réseau FrontHaul (140) non critique quand toutes les stations (150) mobiles sont désassociées de tout réseau FrontHaul (140).

2. Le procédé selon la revendication 1, dans lequel déterminer, pour chaque station (150) du réseau de communication (100), si la station (150) est mobile ou fixe en fonction d'une variation du niveau de signal reçu comporte : comparer un écart-type d'un ensemble de plusieurs moyennes du niveau de signal reçu à un seuil prédéfini, chaque moyenne étant calculée sur une période de durée différente des autres périodes et déterminer que la station (150) est mobile dans le cas où l'écart-type de l'ensemble des moyennes est supérieur audit seuil et que la station (150) étant fixe sinon.

3. Le procédé selon la revendication 1, dans lequel déterminer, pour chaque station (150) du réseau de communication (100), si la station (150) est mobile ou fixe en fonction d'une variation du niveau de signal reçu comporte : comparer une valeur instantanée de niveau de signal reçu à un instant donné avec une valeur moyenne du niveau de signal reçu calculée sur une période de temps précédant ledit instant donné et déterminer que ladite station (150) est mobile dans le cas où la valeur instantanée du niveau de signal reçu est inférieure à une différence de la valeur moyenne moins un premier seuil prédéfini ou dans le cas où la valeur instantanée du niveau de signal reçu est supérieure à une somme de la valeur moyenne et d'un deuxième seuil prédéfini.

4. Le procédé selon l'une des revendications 1 à 3, dans lequel la phase d'extinction d'au moins un réseau FrontHaul (140) non critique comporte :
- Eteindre (306, 308) un réseau FrontHaul (140) non critique si aucune station (150) n'est associée audit réseau FrontHaul (140) non critique.

5. Le procédé selon la revendication 4, dans lequel ladite au moins une information obtenue comportant en outre une information représentative d'un débit de données échangées par ladite station (150) avec un point d'accès (130) et/ou d'une information représentative d'une qualité de service des données échangées par ladite station (150) avec un point d'accès (130) et/ou d'une information représentative d'une demande de connexion à destination de la station (150), le procédé comporte :
- Déterminer (204), pour chaque station (150) fixe du réseau de communication (100), si ladite station (150) gère un trafic critique ou non critique, en fonction de ladite information représentative d'un débit de données et/ou d'une qualité de service et/ou de ladite information représentative d'une demande de connexion,
et dans lequel la phase d'extinction comporte :
- pour chaque réseau FrontHaul (140) non critique auquel sont associées uniquement une ou des stations (150) fixes gérant un trafic non critique, effectuer (312) une tentative de basculement desdites stations (150) fixes afin de les déplacer de leur réseau FrontHaul (140) d'origine vers un autre réseau FrontHaul (140) non éteint.

6. Le procédé selon la revendication 5, dans lequel, déterminer (204) pour chaque station (150) fixe dans le réseau de communication (100) si la station (150) gère un trafic critique ou non critique comporte de déterminer que ladite station (150) fixe gère un trafic critique dans le cas où au moins un critère suivant est rempli :
- ladite station (150) gère du trafic ayant comme qualité de service voix et/ou vidéo ;
- le nombre de paquets émis et/ou reçus par ladite station (150) est supérieur à un seuil donné;
- des demandes de connexion sont transmises à destination de ladite station (150).

7. Le procédé selon l'une des revendications 5 ou 6, dans lequel la tentative de basculement des stations (150) est effectuée (312), pour les stations (150) associées aux réseaux FrontHaul non critiques auxquels sont associées uniquement une ou des stations (150) fixes gérant un trafic non critique, de manière successive selon un ordre desdits réseaux FrontHaul qui augmente avec le nombre de stations (150) associées auxdits réseaux FrontHaul, de sorte que des tentatives de basculement sont d'abord effectuées pour les stations (150) associées au réseau FrontHaul (140) dont le nombre de stations (150) associées est le plus petit avant d'être effectuées pour les stations (150) associées à un réseau FrontHaul (140) dont le nombre de stations (150) associées est plus élevé.

8. Le procédé selon l'une quelconque des revendications précédentes, dans lequel le dispositif maître (110) initie (214) la phase d'extinction après une période de temporisation (210) commençant dès que la dernière station (150) déterminée comme mobile est déterminée comme étant désassociée de tout réseau FrontHaul (140).

9. Le procédé selon l'une des revendications 4 à 8, comportant en outre, après qu'au moins un réseau FrontHaul (140) non critique a été éteint : rallumer (408) les réseaux FrontHaul si une station (150) dans le réseau de communication (100) est déterminée comme mobile et associée à un réseau FrontHaul, une station (150) qui se connecte pour la première fois au réseau de communication (100) en s'associant à un réseau FrontHaul (140) étant considérée mobile par défaut.

10. Le procédé selon la revendication 9, dans lequel la phase d'extinction comporte en outre :
- attribuer un indicateur de déplacement à une station (150) fixe déplacée lors d'une tentative de basculement de leur réseau FrontHaul (140) d'origine vers un autre réseau FrontHaul (140) non éteint,
et dans lequel le dispositif maître (110) effectue, après qu'au moins un réseau FrontHaul (140) non critique a été éteint :
- rallumer (414, 408) tous les réseaux FrontHaul dans le cas où le trafic géré par une station (150) passe de non critique à critique et si un indicateur de déplacement est attribué à ladite station (150).

11. Le procédé selon la revendication 9, dans lequel la phase d'extinction comporte en outre :
- attribuer un indicateur de déplacement à une station (150) fixe déplacée lors d'une tentative de basculement de leur réseau FrontHaul (140) d'origine vers un autre réseau FrontHaul (140) non éteint,
et dans lequel le dispositif maître (110) effectue, après qu'au moins un réseau FrontHaul (140) non critique a été éteint :
- rallumer seulement le réseau FrontHaul (140) d'origine de ladite station (150) dans le cas où le trafic géré par ladite station (150) passe de non critique à critique et si un indicateur de déplacement est attribué à ladite station (150).

12. Le procédé selon l'une des revendications précédentes, comportant : envoyer une instruction d'écoute à un point d'accès (130) gérant un réseau FrontHaul (140) éteint de sorte à rallumer ledit réseau FrontHaul (140) en mode écoute uniquement et, dans le cas où au moins une demande d'association en provenance d'une station (150) non associée est reçue par ledit point d'accès (130), rallumer ledit réseau FrontHaul (140).

13. Un dispositif maître (110) dans un réseau de communication (100), le réseau de communication (100) comportant une pluralité de points d'accès (130) coordonnés de manière centralisée par le dispositif maître (110), les points d'accès (130) et le dispositif maître (110) étant interconnectés entre eux par un réseau d'acheminement, chaque point d'accès (130) gérant un réseau sans fil dit réseau FrontHaul (140), une station (150) pouvant s'associer à un réseau FrontHaul (140) du réseau de communication (100), le dispositif maître (110) étant **caractérisé en ce qu'**il comporte :
- des moyens pour obtenir de chaque point d'accès (130) au moins une information concernant chaque station (150) du réseau de communication (100) associée audit point d'accès (130) ou qui se désassocie dudit point d'accès (130), ladite au moins une information obtenue comportant une information d'association indiquant à quel réseau FrontHaul (140) la station (150) s'associe ou de quel réseau FrontHaul (140) la station (150) se désassocie et comportant en outre une information représentative d'un niveau de signal reçu par le point d'accès (130) en provenance de la station (150),
- des moyens pour déterminer, pour chaque station (150) du réseau de communication (100), si la station (150) est associée à un réseau FrontHaul (140) ou désassociée de tout réseau FrontHaul (140) en fonction de l'information d'association,
- des moyens pour déterminer, pour chaque station (150) du réseau de communication (100), si la station (150) est mobile ou fixe en fonction d'une variation du niveau de signal reçu en provenance de la station (150),
- des moyens pour déterminer, pour chaque station (150) mobile désassociée de tout réseau FrontHaul (140), le dernier réseau FrontHaul (140) auquel la station (150) a été associée en fonction de l'information d'association, ledit dernier réseau FrontHaul (140) étant dit critique,
- des moyens configurés pour initier une phase d'extinction d'au moins un réseau FrontHaul (140) non critique quand toutes les stations (150) mobiles sont désassociées de tout réseau FrontHaul (140).

14. Un programme d'ordinateur, **caractérisé en ce qu'**il comprend des instructions pour implémenter, par un processeur d'un dispositif maître, le procédé selon l'une quelconque des revendications 1 à 12, lorsque ledit programme est exécuté par ledit dispositif maître.

15. Un support de stockage d'informations, **caractérisé en ce qu'**il stocke un programme d'ordinateur comprenant des instructions pour implémenter, par un processeur d'un dispositif maître, le procédé selon l'une quelconque des revendications 1 à 12, lorsque ledit programme est exécuté par ledit dispositif maître.

## Patentansprüche

1. Ein Verfahren zum Abschalten mindestens eines Teils eines Kommunikationsnetzwerks (100), indem das Kommunikationsnetzwerk (100) eine Vielzahl von Zugangspunkten (130) umfasst, die zentral von einem Master-Gerät (110) koordiniert werden. Dabei sind die Zugangspunkte (130) und die Master-Geräte (110) über ein Leitungsnetzwerk (120) miteinander verbunden und jeder Zugangspunkt (130) verwaltet ein drahtloses Netzwerk namens FrontHaul-Netzwerk (140). Zudem kann sich eine Station (150) mit einem FrontHaul-Netzwerk (140) des Kommunikationsnetzwerks (100) verbinden, wobei das Verfahren durch das Master-Gerät (110) implementiert wird und **dadurch gekennzeichnet ist, dass** es Folgendes umfasst:
- Erhalt (200) von jedem Zugangspunkt (130) von mindestens einer Information über jede Station (150) des Kommunikationsnetzwerks (100), die mit dem Zugangspunkt (130) verbunden ist oder sich von dem Zugangspunkt (130) abkoppelt, wobei diese erhaltene Information Kopplungsinformationen enthält, die angeben, mit welchem FrontHaul-Netzwerk (140) die Station (150) eine Verbindung herstellt oder von welchem FrontHaul-Netzwerk (140) sich die Station (150) abkoppelt. Zudem enthält sie Informationen, die einen Signalpegel repräsentieren, den der Zugangspunkt (130) von der Station (150) empfängt,
- Festlegung (203) für jede Station (150) des Kommunikationsnetzwerks (100), ob die Station (150) gemäß der Informationszuordnung mit einem FrontHaul-Netzwerk (140) verbunden ist oder von einem FrontHaul-Netzwerk (140) abgekoppelt ist,
- Festlegung (202) für jede Station (150) des Kommunikationsnetzes (100), ob die Station (150) mobil oder stationär ist, entsprechend einer Variation des von der Station (150) empfangenen Signalpegels,
- Festlegung (206) für jede mobile Station (150), die mit keinem FrontHaul-Netzwerk (140) verbunden ist, des letzten FrontHaul-Netzwerks (140), mit dem die Station (150) gemäß den Kopplungsinformationen verbunden war, wobei das letzte FrontHaul-Netzwerk (140) als kritisch gilt,
- Einleitung (214) einer Abschaltung mindestens eines nicht kritischen FrontHaul-Netzwerks (140), wenn alle mobilen Stationen (150) von einem FrontHaul-Netzwerk (140) abgekoppelt werden.

2. Das Verfahren nach Anspruch 1, indem für jede Station (150) des Kommunikationsnetzwerks (100) festgelegt ist, ob die Station (150) mobil oder stationär ist und indem basierend auf einer Variation im empfangenen Signalpegel Folgendes umfasst wird: Vergleich einer Standardabweichung eines Satzes von mehreren Mittelwerten des Signalpegels, die bei einem vordefinierten Schwellenwert empfangen werden, wobei jeder Mittelwert über einen von den anderen Zeiträumen unterschiedlichen Zeitraum berechnet und ermittelt wird. Zudem wird festgelegt, dass dadurch die Station (150) mobil ist und in dem Fall, in dem die Standardabweichung des Mittelwertsatzes größer als der Schwellenwert ist, dass die Station (150) stationär ist.

3. Verfahren nach Anspruch 1, indem für jede Station (150) des Kommunikationsnetzwerks (100) festgelegt ist, ob die Station (150) mobil oder stationär ist und basierend auf einer Variation des empfangenen Signalpegels Folgendes umfasst: Vergleich eines Momentanwerts des Signalpegels, der zu einem bestimmten Zeitpunkt empfangen wird, mit einem Durchschnittswert des empfangenen Signalpegels, der über einen Zeitraum vor dem gegebenen Zeitpunkt berechnet wird, und Festlegung, dass die Station (150) mobil ist, falls der Momentanwert des Signalpegels, der zu einem bestimmten Zeitpunkt empfangen wird, kleiner ist als eine Differenz des Durchschnittswerts minus einem ersten vordefinierten Schwellenwert oder in dem Fall, in dem der Momentanwert des empfangenen Signalpegels größer als eine Summe aus dem Durchschnittswert und einem zweiten vordefinierten Schwellenwert ist.

4. Verfahren nach einem der Ansprüche 1 bis 3, bei dem die Phase des Abschaltens mindestens eines nicht kritischen FrontHaul-Netzwerks (140) Folgendes umfasst:
- Abschalten (306, 308) eines nicht kritischen FrontHaul-Netzwerks (140), wenn keine Station (150) mit dem nicht kritischen FrontHaul-Netzwerk (140) verbunden ist.

5. Verfahren nach Anspruch 4, bei dem mindestens eine erhaltene Information außerdem Informationen enthält, die eine Datenrate darstellen, die von der Station (150) mit einem Zugangspunkt (130) ausgetauscht wird, und/oder Informationen enthält, die eine Dienstqualität der von der Station (150) mit einem Zugangspunkt (130) ausgetauschten Daten darstellen und/oder Informationen enthält, die für eine für die Station (150) bestimmte Verbindungsanfrage repräsentativ sind, wobei das Verfahren Folgendes umfasst:
- Festlegung (204) für jede stationäre Station (150) des Kommunikationsnetzwerks (100), ob die Station (150) kritischen oder nicht kritischen Verkehr verwaltet, entsprechend der Informationen, die eine Datenrate und/oder eine Dienstqualität darstellen und/oder diese Informationen repräsentativ für eine Verbindungsanfrage sind, und wobei die Phase des Herunterfahrens Folgendes umfasst:
- für jedes nicht kritische FrontHaul-Netzwerk (140), dem nur eine oder mehrere stationäre Stationen (150) zugeordnet sind, die nicht kritischen Verkehr verwalten, einen Versuch durchführen (312), die stationären Stationen (150) umzuschalten, um sie von ihrem ursprünglichen FrontHaul-Netzwerk (140) in ein anderes, nicht ausgeschaltetes FrontHaul-Netzwerk (140) zu verschieben.

6. Verfahren nach Anspruch 5, indem (204) für jede stationäre Station (150) im Kommunikationsnetzwerk (100) festgelegt ist, ob die Station (150) kritischen oder nicht kritischen Verkehr verwaltet. Diese Bestimmung, ob die stationäre Station (150) kritischen Verkehr verwaltet, ist festgelegt, falls mindestens eines der folgenden Kriterien erfüllt ist:
- die Station (150) verwaltet den Verkehr, der über Sprach- und/oder Videoqualität verfügt;
- die Anzahl der von der Station (150) gesendeten und/oder empfangenen Pakete ist größer als ein gegebener Schwellenwert;
- Verbindungsanfragen werden an die Station (150) übermittelt.

7. Verfahren nach einem der Ansprüche 5 oder 6, bei dem der Versuch zum Umschalten der Stationen (150) durchgeführt wird (312) und zwar für die Stationen (150), die den nicht kritischen FrontHaul-Netzwerken zugeordnet sind, zu denen nur eine oder mehrere stationäre (150) Stationen gehören, die nicht kritischem Datenverkehr verwalten. Dies erfolgt nacheinander in einer Reihenfolge der FrontHaul-Netzwerke, die mit der Anzahl der Stationen (150) zunimmt, die den FrontHaul-Netzwerken zugeordnet sind, so dass Failover-Versuche zunächst für die Stationen (150) durchgeführt werden, die mit dem FrontHaul-Netzwerk (140) verbunden sind, deren Anzahl verbundener Stationen (150) am kleinsten ist, bevor es für Stationen (150) durchgeführt wird, die mit einem FrontHaul-Netzwerk (140) verbunden sind, das eine höhere Anzahl an verbundenen Stationen (150) aufweist.

8. Verfahren nach einem der vorhergehenden Ansprüche, indem das Master-Gerät (110) die Phase des Abschaltens nach einer Zeitüberschreitungsperiode (210) einleitet (214). Diese beginnt, sobald festgestellt wird, dass die letzte als mobil festgelegte Station (150) keinem FrontHaul-Netzwerk zugeordnet ist (140).

9. Verfahren nach einem der Ansprüche 4 bis 8, welches weiterhin umfasst, dass nachdem mindestens ein nicht kritisches FrontHaul-Netzwerk (140) abgeschaltet wurde: die FrontHaul-Netzwerke reaktiviert werden (408), wenn festgestellt wird, dass eine Station (150) im Kommunikationsnetzwerk (100) mobil ist und einem FrontHaul-Netzwerk zugeordnet ist, wobei eine Station (150), die sich zum ersten Mal mit dem Kommunikationsnetzwerk (100) verbindet, indem sie sich mit einem FrontHaul-Netzwerk (140) verbindet, standardmäßig als mobil gilt.

10. Verfahren nach Anspruch 9, indem das Abschalten weiterhin Folgendes umfasst:
- Zuweisung eines Indikators zur Verlagerung einer stationären Station (150), die verlagert wird, wenn versucht wird, diese von ihrem ursprünglichen FrontHaul (140) Netzwerk zu einem anderen nicht ausgeschaltetem FrontHaul (140)-Netzwerk zu verlagern und indem das Master-Gerät ( 110 ) Folgendes ausführt, nachdem mindestens ein nicht kritisches FrontHaul-Netzwerk heruntergefahren wurde:
- Erneutes Anschalten (414, 408) aller FrontHaul-Netzwerke für den Fall, dass der von einer Station (150) verwaltete Verkehr von nicht kritisch zu kritisch wechselt und wenn dieser Station (150) ein Indikator zur Verlagerung zugewiesen wird.

11. Verfahren nach Anspruch 9, indem das Abschalten weiterhin Folgendes umfasst:
- Zuweisung eines Indikators zur Verlagerung einer stationären Station (150), die verlagert wird, wenn versucht wird, diese von ihrem ursprünglichen FrontHaul (140)-Netzwerk zu einem anderen
nicht ausgeschaltetem FrontHaul (140)-Netzwerk zu verlagern und indem das Master-Gerät ( 110 ) Folgendes ausführt, nachdem mindestens ein nicht kritisches FrontHaul-Netzwerk heruntergefahren wurde:
- das ursprüngliche FrontHaul-Netzwerk (140) der Station (150) nur dann wieder einschalten,
wenn der von der Station (150) verwaltete Verkehr von nicht kritisch zu kritisch wechselt und der Station (150) ein Indikator zur Verlagerung zugewiesen ist.

12. Verfahren nach einem der vorhergehenden Ansprüche, das Folgendes umfasst: Senden einer Abhöranweisung an einen Zugangspunkt (130), der ein ausgeschaltetes FrontHaul-Netzwerk (140) verwaltet, um das FrontHaul-Netzwerk (140) nur im Abhörmodus einzuschalten und für den Fall, dass mindestens eine Verbindungsanfrage von einer nicht verbundenen Station (150) vom Zugangspunkt (130) empfangen wird, des FrontHaul-Netzwerks (140) erneut einschalten.

13. Ein Master-Gerät (110) in einem Kommunikationsnetzwerk (100), indem das Kommunikationsnetzwerk (100) mehrere Zugangspunkte (130) umfasst, die zentral durch das Master-Gerät (110) koordiniert werden und die Zugangspunkte (130) und das Master-Gerät (110) durch ein Routing-Netzwerk miteinander verbunden sind. Dabei verwaltet jeder Zugangspunkt (130) ein drahtloses Netzwerk namens FrontHaul-Netzwerk (140) und eine Station (150) ist in der Lage, sich einem FrontHaul-Netzwerk (140) des Kommunikationsnetzwerks (100) zuzuordnen. Dabei ist das Master-Gerät (110) **dadurch gekennzeichnet, dass** es Folgendes umfasst:
- Mittel, um von jedem Zugangspunkt (130) mindestens eine Information über jede Station (150) des Kommunikationsnetzwerks (100) zu erhalten, die mit dem Zugangspunkt (130) verbunden ist oder sich von dem Zugangspunkt (130) abkoppelt. Dabei umfasst die erhaltene Information Kopplungsinformationen, die angeben, mit welchem FrontHaul-Netzwerk (140) die Station (150) verbunden ist oder von welchem FrontHaul-Netzwerk (140) sich die Station (150) abkoppelt und zudem Informationen umfasst, die einen Signalpegel repräsentieren, den der Zugangspunkt (130) von der Station (150) empfängt,
- Mittel, um für jede Station (150) des Kommunikationsnetzwerks (100) zu bestimmen, ob die Station (150) mit einem FrontHaul-Netzwerk (140) verbunden ist oder von keinem FrontHaul-Netzwerk (140) abgekoppelt ist, gemäß den Kopplungsinformationen,
- Mittel, um für jede Station (150) des Kommunikationsnetzes (100) zu bestimmen, ob die Station (150) mobil oder stationär ist, entsprechend einer Variation des von der Station (150) empfangenen Signalpegels,
- Mittel, um für jede Station (150) des Kommunikationsnetzwerks (100) zu bestimmen, ob die Station (150) gemäß der Kopplungsinformationen mit einem FrontHaul-Netzwerk (140) verbunden ist oder von einem FrontHaul-Netzwerk (140) abgekoppelt ist,
- Mittel, die so konfiguriert sind, dass sie ein Abschalten von mindestens einem nicht kritischen FrontHaul-Netzwerk (140) einleiten, wenn alle mobilen Stationen (150) von einem FrontHaul-Netzwerk (140) abgekoppelt werden.

14. Ein Computerprogramm, **dadurch gekennzeichnet, dass** es Anweisungen zum Implementieren des Verfahrens nach einem der Ansprüche 1 bis 12 durch einen Prozessor eines Master-Geräts umfasst, wenn das Programm von dem Master-Gerät ausgeführt wird.

15. Ein Informationsspeichermedium, **dadurch gekennzeichnet, dass** es ein Computerprogramm speichert, das Anweisungen zum Implementieren des Verfahrens nach einem der Ansprüche 1 bis 12 durch einen Prozessor eines Master-Geräts umfasst, wenn das Programm von dem Master-Gerät ausgeführt wird.

## Claims

1. A method for switching off at least part of a communication network (100), the communication network (100) comprising a plurality of access points (130) coordinated in a centralised manner by a master device (110), the access points (130) and the master device (110) being interconnected with each other by a backhaul network (120), each access point (130) managing a so-called fronthaul wireless network (140), a station (150) being able to be associated with a fronthaul network (140) of the communication network (100), the method being implemented by the master device (110) and being **characterised in that** it comprises:
- obtaining (200) from each access point (130) at least one item of information relating to each station (150) in the communication network (100) associated with said access point (130) or which is disassociated from said access point (130), said at least one item of information obtained comprising association information indicating with which fronthaul network (140) the station (150) is associated or from which fronthaul network (140) the station (150) is disassociated, and further comprising information representing a signal level received by the access point (130) coming from the station (150),
- determining (203), for each station (150) in the communication network (100), whether the station (150) is associated with a fronthaul network (150) or disassociated from any fronthaul network (140) according to the association information,
- determining (202), for each station (150) in the communication network (100), whether the station (150) is mobile or fixed according to a variation in the received signal level coming from the station (150),
- determining (206), for each mobile station (150) dissociated from any fronthaul network (140), the last fronthaul network (140) with which the station (!50) was associated according to the association information, said last fronthaul network (140) being said to be critical,
- initiating (214) a phase of switching off at least one non-critical fronthaul network (140) when all the mobile stations (150) are disassociated from any fronthaul network (140).

2. The method according to claim 1, wherein determining, for each station (150) in the communication network (100), whether the station (150) is mobile or fixed according to a variation in the received signal level comprises: comparing a standard deviation of a set of a plurality of averages of the received signal level with a predefined threshold, each average being calculated over a period with a duration different from the other periods and determining that the station (150) is mobile in the case where the standard deviation of all the averages is higher than said threshold and that the station (150) being fixed otherwise.

3. The method according to claim 1, wherein determining, for each station (150) in the communication network (100), whether the station (150) is mobile or fixed according to a variation in the received signal level comprises: comparing an instantaneous value of the received signal level at a given instant with an average value of the received signal level calculated over a period of time preceding said given instant and determining that said station (150) is mobile in the case where the instantaneous value of the received signal level is lower than a difference of the average value minus a first predefined threshold or in the case where the instantaneous value of the received signal level is higher than a sum of the average value and a predefined second threshold.

4. The method according to one of claims 1 to 3, wherein the phase of switching off at least one non-critical fronthaul network (140) comprises:
- switching off (306, 308) a non-critical fronthaul network (140) if no station (150) is associated with said non-critical fronthaul network (140).

5. The method according to claim 4, wherein said at least one item of information obtained also comprising information representing a bit rate of data exchanged by said station (150) with an access point (130) and/or information representing a quality of service of the data exchanged by said station (150) with an access point (130) and/or information representing a connection request intended for the station (150), the method comprises:
- determining (204), for each fixed station (150) in the communication network (100), whether said station (150) is managing critical or non-critical traffic, according to said information representing a data rate and/or a quality of service and/or said information representing a connection request,
and wherein the switching-off phase comprises:
- for each non-critical fronthaul network (140) with which only one or more fixed stations managing non-critical traffic are associated, making (312) an attempt at switching said fixed stations (150) in order to transfer them from their original fronthaul network (140) to another not switched-off fronthaul network (140).

6. The method according to claim 5, wherein determining (204), for each fixed station (150) in the communication network (100), whether the station (150) is managing critical or non-critical traffic comprises determining that said fixed station (150) is managing critical traffic in the case where at least one following criterion is met:
- said station (150) is managing traffic having voice and/or video as a quality of service;
- the number of packets sent and/or received by said station (150) is above a given threshold;
- connection requests are transmitted to said station (150).

7. The method according to one of claims 5 or 6, wherein the attempt at switching the stations (150) is made (312), for the stations (150) associated with the non-critical fronthaul networks with which only one or more fixed stations (150) managing non-critical traffic are associated, successively in an order of said fronthaul networks that increases with the number of stations (150) associated with said fronthaul networks, so that switching attempts are first of all made for the stations (150) associated with the fronthaul network (140) the number of associated stations (150) of which is smaller before being made for the stations associated with a fronthaul network (140) the number of associated stations (150) of which is greater.

8. The method according to any one of the preceding claims, wherein the master device (110) initiates (214) the switching-off phase after a time-delay period (210) commencing as soon as the last station (150) determined as being mobile is determined as being disassociated from any fronthaul network (140).

9. The method according to one of claims 4 to 8, further comprising, after at least one non-critical fronthaul network (140) has been switched off, switching on (408) the fronthaul networks if a station (150) in the communication network (100) is determined as being mobile and associated with a fronthaul network, a station (150) that connects for the first time to the communication network (100) while associating with a fronthaul network (140) being considered to be mobile by default.

10. The method according to claim 9, wherein the switching-off phase further comprises:
- attributing a movement indicator to a fixed station (150) transferred during an attempt at switching from their original fronthaul network (140) to another fronthaul network (140) that is not switched off,
and wherein the master device (110), after at least one non-critical fronthaul network (140) has been switched off:
- switches on (414, 408) all the fronthaul networks in the case where the traffic managed by a station (150) passes from non-critical to critical and if a transfer indicator is attributed to said station (150).

11. The method according to claim 9, wherein the switching-off phase further comprises:
- attributing a transfer indicator to a fixed station (150) transferred during an attempt at switching from their original fronthaul network (140) to another fronthaul network (140) that is not switched off,
and wherein the master device (110), after at least one non-critical fronthaul network (140) has been switched off:
- switches on only the original fronthaul network (140) of said station (150) in the case where the traffic managed by said station (150) passes from non-critical to critical and if a transfer indicator is attributed to said station (150).

12. The method according to one of the preceding claims, comprising: sending a listening instruction to an access point (130) managing a switched-off fronthaul network (140) so as to switch on said fronthaul network (140) in listening mode only, and, in the case where at least one association request coming from a non-associated station (150) is received by said access point (130), switching on said fronthaul network (140).

13. A master device (110) in a communication network (100), the communication network (100) comprising a plurality of access points (130) coordinated in a centralised manner by the master device (110), the access points (130) and the master device (110) being interconnected with each other by a backhaul network, each access point (150) managing a wireless network known as a fronthaul network (140), a station (150) being able to associate itself with a fronthaul network (140) of the communication network (100), the master device (110) being **characterised in that** it comprises:
- means for obtaining from each access point (130) at least one item of information relating to each station (150) in the communication network (100) associated with said access point (130) or which is disassociated from said access point (130), said at least one item of information obtained comprising association information indicating with which fronthaul network (140) the station (150) is associated or from which fronthaul network (140) the station (150) is disassociated, and further comprising information representing a signal level received by the access point (130) coming from the station (150),
- means for determining, for each station (150) in the communication network (100), whether the station (150) is associated with a fronthaul network (150) or disassociated from any fronthaul network (140) according to the association information,
- means for determining, for each station (150) in the communication network (100), whether the station (150) is mobile or fixed according to a variation in the received signal level coming from the station (150),
- means for determining, for each mobile station (150) dissociated from any fronthaul network (140), the last fronthaul network (140) with which the station (!50) was associated according to the association information, said last fronthaul network (140) being said to be critical,
- means configured for initiating a phase of switching off at least one non-critical fronthaul network (140) when all the mobile stations (150) are disassociated from any fronthaul network (140).

14. A computer program, **characterised in that** it comprises instructions for implementing, by a processor of a master device, the method according to any one of claims 1 to 12, when said program is executed by said master device.

15. An information storage medium, **characterised in that** it stores a computer program comprising instructions for implementing, by a processor of a master device, the method according to any one of claims 1 to 12, when said program is executed by said master device.
